(19)

Europäisches Patentamt

European Patent Office

Office européen des brevets

(11) **EP 3 849 147 B1**

(12) **EUROPEAN PATENT SPECIFICATION**

(45) Date of publication and mention of the grant of the patent:
**01.05.2024   Bulletin 2024/18**

(21) Application number: **19858803.0**

(22) Date of filing: **16.09.2019**

(51) International Patent Classification (IPC):
*H04L 27/00* (2006.01)         *H04B 10/61* (2013.01)

(52) Cooperative Patent Classification (CPC):
**H04L 27/0014; H04B 10/6164;** H04L 2027/0024;
Y02D 30/70

(86) International application number:
**PCT/CN2019/105918**

(87) International publication number:
**WO 2020/052683 (19.03.2020 Gazette 2020/12)**

(54) **FREQUENCY OFFSET ESTIMATION AND COMPENSATION METHOD AND APPARATUS, COMMUNICATION DEVICE, AND COMPUTER READABLE STORAGE MEDIUM**

VERFAHREN UND VORRICHTUNG ZUR FREQUENZVERSATZSCHÄTZUNG UND -KOMPENSATION, KOMMUNIKATIONSVORRICHTUNG UND COMPUTERLESBARES SPEICHERMEDIUM

PROCÉDÉ ET APPAREIL D'ESTIMATION ET DE COMPENSATION DE DÉCALAGE DE FRÉQUENCE, DISPOSITIF DE COMMUNICATION ET SUPPORT D'INFORMATIONS LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.09.2018   CN 201811068358**

(43) Date of publication of application:
**14.07.2021   Bulletin 2021/28**

(73) Proprietor: **ZTE Corporation**
**Shenzhen, Guangdong 518057 (CN)**

(72) Inventor: **ZHANG, Liangjun**
**Shenzhen, Guangdong 518057 (CN)**

(74) Representative: **WBH Wachenhausen**
**Patentanwälte PartG mbB**
**Müllerstraße 40**
**80469 München (DE)**

(56) References cited:
**WO-A1-2017/059783      US-A1- 2012 155 890**
**US-A1- 2016 323 091**

- ZHOU XIANG: "Efficient Clock and Carrier Recovery Algorithms for Single-Carrier Coherent Optical Systems: A Systematic Review on Challenges and Recent Progress", IEEE SIGNAL PROCES SING MAGAZINE, IEEE SERVICE CENTER, PISCATAWAY, NJ, US, vol. 31, no. 2, 1 March 2014 (2014-03-01), pages 35-45, XP011539817, ISSN: 1053-5888, DOI: 10.1109/MSP.2013.2281071 [retrieved on 2014-02-12]

**Description**

**TECHNICAL FIELD**

The present disclosure relates to the field of optical communication.

**BACKGROUND**

In coherent optical communication systems, a certain frequency offset is generated at a receiving end as the optical carrier wavelength of a laser at a transmitting end and that at the receiving end cannot be guaranteed to be exactly the same. Carrier frequency offset will lead to serious degradation of system performance, so it is very important to correctly estimate the frequency offset and perform corresponding compensation to ensure system performance and communication quality.

US20160323091A1 discloses a carrier recovery unit including: separation-and-output section that outputs separated symbol group formed into block; a priori state-estimation section that obtains a priori estimate acquired by estimating values processed this time from among values of intra-block frequency and central phase processed last time; provisional compensation section that provisionally compensates the phase of each separated symbol based on the a priori estimation phase; decision section that performs decision based on the reference signal for the symbol before decision, and obtains symbol after decision; error-estimation section that calculates the frequency and phase errors; a posteriori state-estimation section that obtains a posteriori estimate based on the frequency and phase errors; actual compensation section that actually compensates the phase based on the a posteriori estimation phase; and feedback processing section that feeds back the a posteriori estimate as the values processed last time to the a priori state estimation section.

WO2017059783A1 discloses a method and apparatus for performing residual phase noise compensation. A coarse carrier compensation of a received modulated signal is performed to obtain a coarse carrier compensated signal and a trellis-based residual carrier recovery is performed to estimate a residual phase noise of the coarse carrier compensated signal. The coarse carrier compensated signal is compensated based on the estimated residual phase noise.

While the above patent applications may achieve their intended purposes, there is still a need for a new and improved frequency offset estimation and compensation method and device.

**SUMMARY**

The features of the method, device and storage medium according to the present disclosure are set out in the appended set of claims.

**BRIEF DESCRIPTION OF DRAWINGS**

Fig. 1 is a flow chart of a frequency offset estimation and compensation method provided in an embodiment of the present disclosure;

Fig. 2 is another flow chart of the frequency offset estimation and compensation method provided in the embodiment of the present disclosure;

Fig. 3 is a schematic diagram of performance comparison between a frequency offset estimation and compensation scheme provided in the embodiment of the present disclosure and a frequency offset estimation based on a Viterb-Viterb algorithm;

Fig. 4 is yet another flow chart of the frequency offset estimation and compensation method provided in the embodiment of the present disclosure;

Fig. 5 is a structure diagram of a frequency offset estimation and compensation apparatus provided in an embodiment of the present disclosure;

Fig. 6 is another structure diagram of the frequency offset estimation and compensation apparatus provided in an embodiment of the present disclosure; and

Fig. 7 is a schematic diagram of a hardware structure of a communication device provided in an embodiment of the present disclosure.

## DETAILED DESCRIPTION

In order to make the objective, technical schemes and advantages of the present disclosure clearer, embodiments of the present disclosure will be further described in detail below with reference to the accompanying drawings by detailed description of the present disclosure. It should be understood that the specific embodiments described herein are used only for explaining the present disclosure, and not for limiting the present disclosure.

In coherent optical communication systems, a certain frequency offset is generated at a receiving end as the optical carrier wavelength of a laser at a transmitting end and that at the receiving end cannot be guaranteed to be exactly the same. Carrier frequency offset will lead to serious degradation of system performance, so it is very important to correctly estimate the frequency offset and perform corresponding compensation to ensure system performance and communication quality.

At present, the mainstream frequency offset estimation and compensation algorithms include Viterbi-Viterbi (V-V) algorithm, Fast Fourier Transformation (FFT) algorithm and so on. The V-V algorithm is suitable for a Quadrature Phase Shift Keyin (QPSK) modulation format, but has limited compensation ability for high-order Quadrature Amplitude Modulation (QAM). The FFT algorithm is transparent to the modulation format, but is not favorable for implementation in hardware due to its high complexity. Therefore, it can be seen that the existing frequency offset estimation and compensation algorithms generally have poor compensation accuracy.

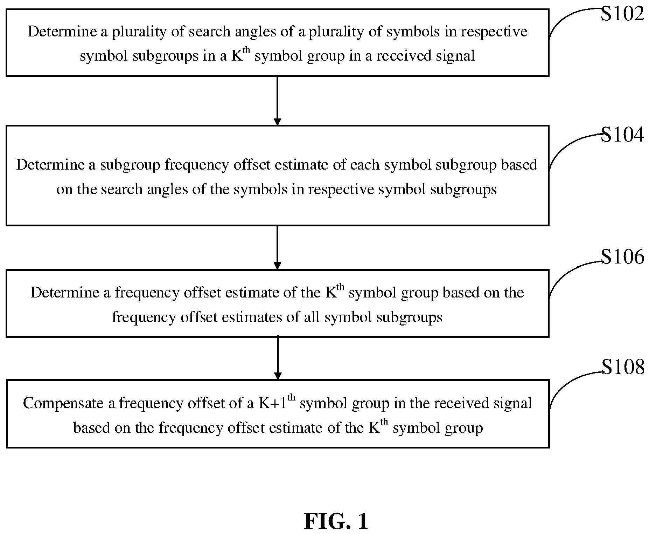

In view of this, according to an embodiment of the present disclosure, a frequency offset estimation and compensation method is provided, as shown in Fig. 1, which is a flow chart of the frequency offset estimation and compensation method according to the embodiment provided in the present disclosure. The frequency offset estimation and compensation method includes steps S102 to S108.

At step S 102, a plurality of search angles of a plurality of symbols in respective symbol subgroups in a $K^{th}$ symbol group in a received signal are determined.

As used herein, the symbol group refers to a symbol group containing a plurality of symbols. In some examples of the embodiment, the symbol group may refer to a "frame", and one symbol group is one signal frame. It can be understood that the received signal received by a communication device from a transmitting end includes at least one symbol group, and, in general, should include a plurality of symbol groups. Here, the $K^{th}$ symbol group subjected to frequency offset compensation in the received signal is referred to as the $K^{th}$ symbol group, and the $(K+1)^{th}$ symbol group subjected to frequency offset compensation is referred to as the $(K+1)^{th}$ symbol group, where K is greater than or equal to 1.

The symbol subgroup refers to the division of the symbol group, so one symbol group includes at least one symbol subgroup. According to the embodiment provided in the present disclosure, one symbol subgroup consists of at least two symbols of which phase noise can be regarded as the same. It can be understood that the phase noise of each symbol in the symbol subgroup cannot be exactly the same. However, the phase noise does not differ much as the symbols are close, and may be regarded as the same. In one example, the symbol group is a frame, one signal frame may include 6400 symbols, and a symbol subgroup may include 64 consecutive symbols, so that one signal frame may include 100 symbol subgroups, where the phase noise of all 64 symbols in one symbol subgroup may be approximately expressed as $\theta_\varphi$.

According to the embodiment provided in the present disclosure, when processing the received signal, the communication device may determine the search angles of the symbols in the symbol subgroup based on a Blind Phase Search (BPS) algorithm.

According to the embodiment provided in the present disclosure, the communication device may determine the search angle of each symbol through calculation when determining the search angles of the symbols in the symbol subgroup. In one example, it is assumed that there are 100 symbol subgroups in one signal frame and each symbol subgroup includes 64 symbols, the communication device needs to determine the search angles of 64 symbols for each symbol subgroup, and to calculate the search angles of 6400 symbols for the entire signal frame, where the search angles of the 6400 symbols may be expressed as $\varphi_1$, $\varphi_2$, $\varphi_3$, $\varphi_4$..., $\varphi_{6400}$ in turn.

According to the embodiment provided in the present disclosure, the communication device may not need to calculate the search angles of all symbols when determining the search angles of the symbols in respective symbol subgroups in the $K^{th}$ symbol group, because it may not be necessary to use the search angles of all symbols in the subsequent calculation process. In one example, the communication device only needs to calculate the search angles of the first and last symbols for one symbol subgroup. It is assumed that the $K^{th}$ symbol group includes a $q^{th}$ symbol subgroup in which there are m symbols, the communication device only needs to calculate the search angle $\varphi_1$ of the first symbol in the symbol subgroup and the search angle $\varphi_m$ of the last symbol in the symbol subgroup. There is no doubt that the symbols for which the communication device calculates the search angle are not limited to the first and last symbols in the symbol subgroup, but may also be at least two arbitrary symbols in the symbol subgroup.

According to the embodiment provided in the present disclosure, BPS is not the only way for the communication device to determine the search angle of each symbol. In some other examples, the communication device may also determine the search angle of each symbol based on other algorithms.

At step S104, a subgroup frequency offset estimate of each symbol subgroup is determined based on the search angles of the symbols in respective symbol subgroups.

According to the embodiment provided in the present disclosure, after determining the search angles of the symbols in a certain symbol subgroup, the communication device may determine the subgroup frequency offset estimate of the symbol subgroup. The following is an example of the communication device determining the subgroup frequency offset estimate of the $q^{th}$ symbol subgroup in the $K^{th}$ symbol group.

It is assumed that the $q^{th}$ symbol subgroup includes m symbols, where the frequency offset phase $\theta_f$, phase noise $\theta_\varphi$ and search angle $\varphi_n$ of the $n^{th}$ symbol satisfy the relation as follows: $n * \theta_f + \theta_\varphi = \varphi_n$, where n should be greater than or equal to 1 and less than or equal to m.

Since the phase noise $\theta_\varphi$ of each symbol in one symbol subgroup can be regarded as the same, in this example, the relations between the frequency offset phase, phase noise and search angle of each symbol in the $q^{th}$ symbol subgroup may be expressed as follows:

$$\theta_f + \theta_\varphi = \varphi_1 \qquad (1)$$

$$2\theta_f + \theta_\varphi = \varphi_2 \qquad (2)$$

$$\ldots$$

$$m * \theta_f + \theta_\varphi = \varphi_m \qquad (m)$$

According to the above formulas (1) to (m), it can be deduced that $\theta_f = \frac{\varphi_m - \varphi_1}{m-1}$. Therefore, the subgroup frequency offset estimate $\Delta f_q$ of the $q^{th}$ symbol subgroup may be expressed as $\Delta f_q = \frac{\varphi_m - \varphi_1}{m-1} \cdot \frac{R_s}{2\pi}$, where $\varphi_m$ is the search angle of a $m^{th}$ symbol in the $q^{th}$ symbol subgroup, $\varphi_1$ is the search angle of a first symbol in the $q^{th}$ symbol subgroup, and $R_s$ is a baud rate of the received signal.

At step S 106, a frequency offset estimate of the $K^{th}$ symbol group is determined based on the frequency offset estimates of all symbol subgroups.

According to the embodiment provided in the present disclosure, after determining the subgroup frequency offset estimates of all symbol subgroups in the $K^{th}$ symbol group, the frequency offset estimate of the $K^{th}$ symbol group can be determined based on the frequency offset estimates of all symbol subgroups.

In the embodiment of the present disclosure, the communication device calculates a mean value of the subgroup frequency offset estimates of all symbol subgroups in the $K^{th}$ symbol group to obtain the mean value of the subgroup frequency offset estimates, and then takes take the mean value of the subgroup frequency offset estimates as the frequency offset estimate of the $K^{th}$ symbol group.

In another example of the embodiment of the present disclosure, the communication device may first screen the subgroup frequency offset estimates of all symbol subgroups, calculate the mean value of the remaining subgroup frequency offset estimates after eliminating some outliers, and take the obtained mean value as the frequency offset estimate of the $K^{th}$ symbol group.

In other examples of the embodiment of the present disclosure, in addition to determining the frequency offset estimate of the $K^{th}$ symbol group by calculating the mean value, the communication device may also directly select a median subgroup group frequency offset estimate as the frequency offset estimate of the $K^{th}$ symbol group without calculation after determining the subgroup frequency offset estimates of all symbol subgroups.

In one example of the embodiment of the present disclosure, if one symbol group only includes one symbol subgroup, the communication device may calculate the subgroup frequency offset estimate of the symbol subgroup, and then directly take such subgroup frequency offset estimate as the frequency offset estimate of the symbol group.

At step S108, a frequency offset of a $(K+1)^{th}$ symbol group in the received signal is compensated based on the frequency offset estimate of the $K^{th}$ symbol group.

According to the embodiment provided in the present disclosure, the communication device may compensate the frequency offset of the (K+1)th symbol group in the received signal after calculating the frequency offset estimate of the Kth symbol group in the received signal, and then.

According to an embodiment provided in the present disclosure, a frequency offset compensation scheme is provided, and the communication device may compensate the frequency offset of the (K+1)th symbol group based on the following formula: $S'((K+1)) = S((K+1)) \cdot \exp(-\frac{i2\pi\Delta f}{R_s})$ , where S((K + 1)) represents the frequency offset of the (K+1)th symbol group before frequency offset compensation, S'((K + 1)) represents the frequency offset of the (K+1)th symbol group after frequency offset compensation, Δf represents the frequency offset estimate of the Kth symbol group, and $R_s$ represents the baud rate of the received signal.

According to the embodiment provided in the present disclosure, compensation by the communication device on the frequency offset of the (K+1)th symbol group based on the frequency offset estimate of the Kth symbol group is actually the compensation by the communication device on the frequency offset of the next symbol group based on the frequency offset estimate of the previous symbol group. When K is equal to 1, the communication device compensates the frequency offset of the second symbol group based on the frequency offset estimate of the first symbol group; when K is equal to 2, the communication device compensates the frequency offset of the third symbol group based on the frequency offset estimate of the second symbol group, and so on, until the frequency offset compensation on the last symbol group in the received signal is finished based on the frequency offset estimate of the penultimate symbol group in the received signal.

It can be understood that when K is greater than 1, the Kth symbol group has already undergone frequency offset compensation before the calculation of the frequency offset estimate of the Kth symbol group, i.e., the Kth symbol group has undergone frequency offset compensation based on the frequency offset estimate of the (K-1)th symbol group. Therefore, determination of the frequency offset estimate of the Kth symbol group is actually the calculation of the residual frequency offset of the Kth symbol group after frequency offset compensation. In fact, the frequency offset compensation on the (K+1)th symbol group is the frequency offset compensation performed based on the residual frequency offset of the (K+1)th symbol group.

According to the frequency offset estimation and compensation method provided in the embodiment of the present disclosure, since the approximate phase noise of all symbols in one symbol subgroup can be regarded as the same, the subgroup frequency offset estimates of the symbol subgroups are determined based on the search angles of the symbols determined by the BPS algorithm, the frequency offset estimate of the symbol group is determined based on the subgroup frequency offset estimates of the symbol subgroups for compensating the frequency offset of the next symbol group based on the frequency offset estimate, so that all the symbol groups in the received signal can be subjected to frequency offset compensation by repeatedly performing the above process on all the symbol groups in turn. The method is low in processing complexity, but its accuracy can be greatly improved compared with the existing V-V algorithm.

According to the embodiment provided in the present disclosure, the frequency offset estimation and compensation method can estimate relatively fine frequency offsets, thus enabling a high accuracy of frequency offset estimation and compensation. For ease of description, the frequency offset estimation and compensation method according to the embodiment provided in the present disclosure is herein referred to as a "fine frequency offset estimation and compensation scheme". However, although the fine frequency offset estimation and compensation scheme has the advantage of higher estimation accuracy, the range of frequency offset estimation based on this algorithm is relatively small. Therefore, if the frequency offset of the received signal is high, it is less suitable to adopt this scheme for frequency offset compensation.

According to the embodiment provided in the present disclosure, before the fine frequency offset estimation and compensation scheme is adopted to estimate the frequency offset of the symbol group, it may first be determined that the current residual frequency offset is less than a default frequency offset threshold. That is, before determining the frequency offset estimate of the Kth symbol group based on the fine frequency offset estimation and compensation scheme, it may first be determined that the frequency offset estimate of the (K-1)th symbol group (i.e., the residual frequency offset of the (K-1)th symbol group after frequency offset compensation) is less than the default frequency offset threshold.

According to the embodiment provided in the present disclosure, if it is determined by judgment that the frequency offset estimate of the (K-1)th symbol group is greater than or equal to the default frequency offset threshold, it is indicated that the current frequency offset of the received signal is not within the range where the fine frequency offset estimation and compensation scheme can be adopted. In this case, another scheme is further provided in the embodiment, that is, if it is determined that the frequency offset estimate of the (K-1)th symbol group is greater than or equal to the default frequency offset threshold, the communication device, after compensating the frequency offset of the Kth symbol group based on the frequency offset estimate of the (K-1)th symbol group, may determine the frequency offset estimate of the

$K^{th}$ symbol group based on at least one of V-V algorithm and FFT algorithm. Since the V-V algorithm and FFT algorithm can estimate a large range of frequency offset but have lower accuracy, the scheme for frequency offset estimation based on such algorithms is herein referred to as a "coarse frequency offset estimation and compensation scheme" to be distinguished from the fine frequency offset estimation and compensation scheme mentioned above. After determining the frequency offset estimate of the $K^{th}$ symbol group based on the coarse frequency offset estimation and compensation scheme, the frequency offset of the $(K+1)^{th}$ symbol group is compensated based on the frequency offset estimate of the $K^{th}$ symbol group.

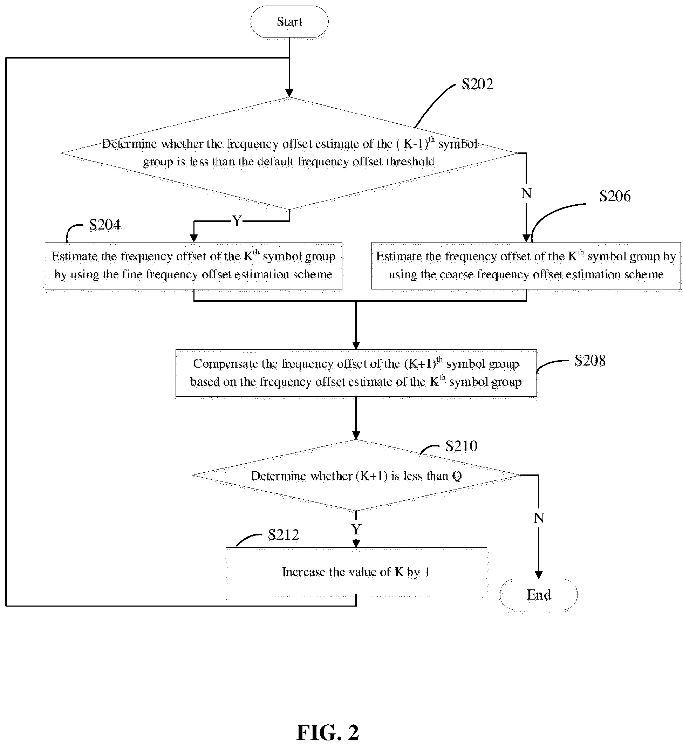

Fig. 2 shows another flow chart of the frequency offset estimation and compensation method provided in the embodiment of the present disclosure. It is assumed that the received signal includes a total of Q symbols, where Q is a positive integer greater than 1. The frequency offset estimation and compensation method may include steps S202 to 5212.

At step S202, it is determined whether the frequency offset estimate of the $(K-1)^{th}$ symbol group is less than the default frequency offset threshold; if so, the method proceeds to step S204; and if not, the method proceeds to step S206.

It can be understood that when K is 1, there is no $(K-1)^{th}$ symbol group. Therefore, in some examples of the embodiment, when K is 1, the step S204 or S206 may be performed directly without performing the step S202. Considering that the first symbol group in the received signal has not undergone frequency offset compensation at all, the frequency offset is usually large. Therefore, in the embodiment, when K is 1, S206 may be performed.

It can be understood that when K is greater than 2, the frequency offset estimate of the $(K-1)^{th}$ symbol group refers to the residual frequency offset after frequency offset compensation. However, when the $(K-1)^{th}$ symbol group actually refers to the first symbol group, i.e., when K is equal to 2, the frequency offset estimate of the $(K-1)^{th}$ symbol group refers to the frequency offset estimate without frequency offset compensation, i.e., the frequency offset estimate of the first symbol group itself.

At step S204, the frequency offset of the $K^{th}$ symbol group is estimated by using the fine frequency offset estimation scheme (the fine frequency offset estimation and compensation scheme), and the method proceeds to step S208.

According to the embodiment provided in the present disclosure, if it is determined through judgment that the frequency offset estimate of the $(K-1)^{th}$ symbol group is less than the default frequency offset threshold, the communication device may estimate the frequency offset of the $K^{th}$ symbol group by using the fine frequency offset estimation and compensation scheme described in the above embodiment after compensating the frequency offset of the $K^{th}$ symbol group based on the frequency offset estimate of the $(K-1)^{th}$ symbol group, i.e., the communication device may first determine the search angles of the symbols in respective symbol subgroups in the $K^{th}$ symbol group based on the BPS algorithm, determine the subgroup frequency offset estimates of all symbol subgroups based on the determined search angles, and then determine the frequency offset estimate of the $K^{th}$ symbol group based on the subgroup frequency offset estimates.

At step S206, the frequency offset of the $K^{th}$ symbol group is estimated by using the coarse frequency offset estimation scheme (the coarse frequency offset estimation and compensation scheme), and the method proceeds to step S208.

According to the embodiment provided in the present disclosure, if it is determined through judgment that the frequency offset estimate of the $(K-1)^{th}$ symbol group is greater than or equal to the default frequency offset threshold, the communication device may estimate the frequency offset of the $K^{th}$ symbol group by using the coarse frequency offset estimation and compensation scheme provided in the embodiment after compensating the frequency offset of the $K^{th}$ symbol group based on the frequency offset estimate of the $(K-1)^{th}$ symbol group.

According to the embodiment provided in the present disclosure, the process in which the communication device estimates the frequency offset of the $K^{th}$ symbol group based on the V-V algorithm may be as follows. It is assumed that the $K^{th}$ symbol group includes N symbols, the phase information carried by the symbols and the phase noise caused by the laser can be eliminated through conjugate multiplication and biquadratic operation of two adjacent symbols: $C(k) = [S(k) \cdot S^*(k - 1)]^4$, where $S(k - 1)$ represents the frequency offset of the $(K-1)^{th}$ symbol in the $K^{th}$ symbol group, and $S(k)$ represents the frequency offset of the $k^{th}$ symbol in the $K^{th}$ symbol group. A plurality of $C(k)$ are added and averaged to eliminate the influence of white noise, so that the frequency offset estimate of the $K^{th}$ symbol group

can be obtained: $$\Delta f = \frac{R_s}{8\pi} \cdot \arg\left\{ \frac{\sum_{k=1}^{N}[S(k)\cdot S^*(k-1)]^4}{N} \right\}$$ , where $R_s$ is the baud rate of the received signal, N represents the number of symbols in the $K^{th}$ symbol group, and arg represents the argument operation.

According to the embodiment provided in the present disclosure, the process of the coarse frequency offset estimation scheme based on the FFT algorithm may be as follows: a quartic spectrum of data symbols is obtained through operations, and the analysis thereof shows that there is the maximum spectrum component at the frequency of 4*Δf, so the frequency offset estimate Δf of the $K^{th}$ symbol group may be obtained by searching the maximum spectrum component of the quartic spectrum of the data symbols, and its expression is as follows: $\Delta f = 1/4 \max\{FFT(S^4(k))\}$.

At step S208, the frequency offset of the $(K+1)^{th}$ symbol group is compensated based on the frequency offset estimate of the $K^{th}$ symbol group, and the method proceeds to step S210.

According to the embodiment provided in the present disclosure, after the frequency offset estimate of the $K^{th}$ symbol group is determined, the frequency offset of the $(K+1)^{th}$ symbol group may be compensated based on the frequency offset estimate of the $K^{th}$ symbol group.

According to the embodiment provided in the present disclosure, the communication device can compensate the frequency offset of the $(K+1)^{th}$ symbol group according to the following formula:

$$S'((K+1)) = S((K+1)) \cdot \exp\left(-\frac{i2\pi\Delta f}{R_s}\right)$$

, where $S((K+1))$ represents the frequency offset of the $(K+1)^{th}$ symbol group before frequency offset compensation, $S'((K+1))$ represents the frequency offset of the $(K+1)^{th}$ symbol group after frequency offset compensation, $\Delta f$ represents the frequency offset estimate of the $K^{th}$ symbol group, and $R_s$ represents the baud rate of the received signal.

At step S210, it is determined whether (K+1) is less than Q, where Q is the total number of symbol groups in the received signal, if so, the method proceeds to step S212; and if not, the process ends.

According to the embodiment provided in the present disclosure, after the frequency offset of the $(K+1)^{th}$ symbol group is compensated, it is necessary to determine whether there are other symbol groups to be subjected to frequency offset compensation based on whether the $(K+1)^{th}$ symbol group is the last symbol group in the received signal. Therefore, the communication device needs to determine whether there are still symbol groups to be processed in terms of frequency offset, i.e., to determine whether the value of (K+1) is less than the total number Q of symbol groups in the received signal; if so, the method proceeds to step S212; if not, the process ends.

At step S212, the value of K is increased by 1.

According to the embodiment provided in the present disclosure, after the frequency offset of the $(K+1)^{th}$ symbol group is compensated, it is necessary to estimate and compensate the frequency offset of a symbol group following the $(K+1)^{th}$ symbol group, so the value of K may be increased by 1 at a time. After the value of K is increased, it is necessary to perform the process repeatedly, so that the communication device performs the step S202 again.

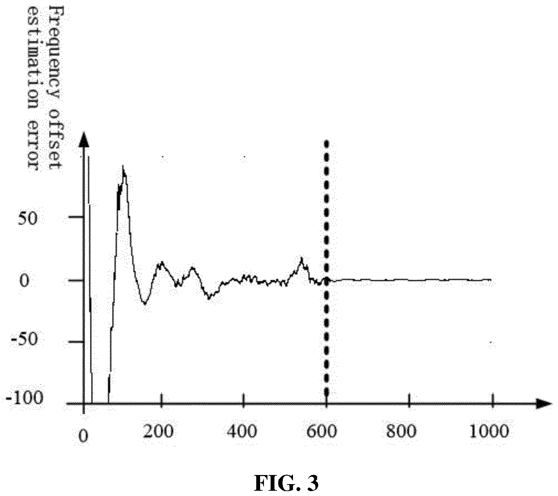

According to the frequency offset estimation and compensation method provided in the embodiment of the present disclosure, when the frequency offset of the received signal is large, the coarse frequency offset estimation and compensation scheme based on an algorithm such as FFT algorithm and V-V algorithm is adopted to estimate the frequency offset of a previous symbol group after frequency offset compensation, and then the frequency offset of a next symbol group is compensated based on the determined frequency offset estimate. In this way, the FFT algorithm, V-V algorithm and other algorithms with a large frequency offset estimation range can be adopted to implement rapid convergence of the frequency offset of the received signal, thus converging the frequency offset of the received signal to a smaller range. Then, the communication device estimates the frequency offset of the previous symbol group which has been compensated by using the fine frequency offset estimation and compensation scheme based on the BPS algorithm, and then compensates the next symbol group based on the determined frequency offset estimate, thus ensuring the accuracy of frequency offset estimation of the symbol group and improving the accuracy of frequency offset compensation. Generally, the accuracy of frequency offset estimation and compensation based only on the V-V algorithm is only about 10 MHz, but it can reach 1 MHz by using the frequency offset estimation and compensation method provided in the embodiment of the present disclosure. Fig. 3 is a schematic diagram of performance comparison between the traditional frequency offset estimation and compensation scheme based on the V-V algorithm and the frequency offset estimation and compensation scheme provided in the embodiment of the present disclosure.

Fig. 3 shows the error of the frequency offset estimation based on the V-V algorithm on the left side of the dashed line, and the error of frequency offset estimation using the frequency offset estimation and compensation method provided in the embodiment of the present disclosure on the right side of the dashed line. It is clear from Fig. 3 that the frequency offset estimation and compensation method provided in the embodiment of the present disclosure has higher accuracy of frequency offset estimation.

The frequency offset estimation and compensation method provided in the embodiment of the present disclosure combines the advantages of rapid frequency offset convergence of the coarse frequency offset estimation and compensation scheme and high frequency offset estimation accuracy of the fine frequency offset estimation and compensation scheme.

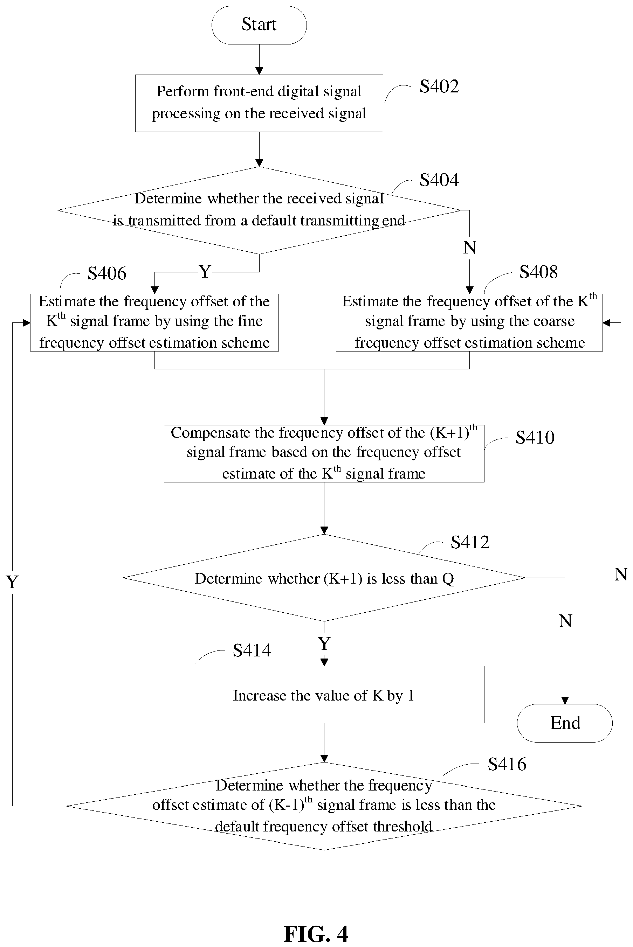

Fig. 4 shows another flow chart of the frequency offset estimation and compensation method provided in the embodiment of the present disclosure. It is assumed that the symbol groups are frames and each symbol subgroup includes 64 symbols. The frequency offset estimation and compensation method may include steps S402 to S416.

At step S402, front-end digital signal processing is performed on the received signal, and the method proceeds to step S404.

According to the embodiment provided in the present disclosure, the so-called front-end digital signal processing here may include delay adjustment, DC component removal, dispersion compensation, clock synchronization, and polarization demultiplexing, etc. After the front-end digital signal processing, the received signal with frequency offset and phase noise can be obtained.

At step S404, it is determined whether the received signal is transmitted from a default transmitting end; if so, the method proceeds to step S406; and if not, the method proceeds to step S408.

According to the embodiment provided in the present disclosure, in some communication scenarios, the frequency offset of a laser at the transmitting end and the frequency offset of a laser at a receiving end are relatively small, and it can be determined that the frequency offset between the two is not large even without frequency offset estimation. In this case, the fine frequency offset estimation and compensation scheme can be directly adopted for frequency offset estimation and compensation of signal frames. For example, the frequency offset between a data transmitting end and a data receiving end in a data center is not large. Therefore, if the signal receiving end can determine that the currently received signal is transmitted from the transmitting end with little frequency offset from the laser at the local end, the receiving end can directly use the fine frequency offset estimation compensation scheme for frequency offset estimation, instead of using the coarse frequency offset estimation and compensation scheme for frequency offset estimation and compensation first until the frequency offset is less than a default frequency offset threshold and then using the fine frequency offset estimation and compensation scheme for frequency offset estimation of the symbol groups.

At step S406, the frequency offset of the $K^{th}$ signal frame is estimated using the fine frequency offset estimation scheme (the fine frequency offset estimation and compensation scheme), and the method proceeds to step S410.

According to the embodiment provided in the present disclosure, a certain symbol subgroup in the signal frame includes 64 symbols in total, and the communication device may first determine a search angle corresponding to each symbol based on the BPS algorithm, where the frequency offset phase $\theta_f$, phase noise $\theta_\varphi$ and search angle $\varphi_1$ of the first symbol satisfy the relation as follows: $\theta_f + \theta_\varphi = \varphi_1$; the frequency offset phase, phase noise and search angle of the second to $64^{th}$ symbols satisfy the relations as follows in turn: $2\theta_f + \theta_\varphi = \varphi_2, ...64 * \theta_f + \theta_\varphi = \varphi_{64}$. Here, it is considered that the phase noise of the 64 symbols is approximately the same or changes little, so the subgroup frequency offset estimate of this symbol subgroup may be calculated as:

$$\Delta f = \frac{\varphi_{64} - \varphi_1}{63} \cdot \frac{R_s}{2\pi}$$

. It is assumed that there are 10 symbol subgroups in the $K^{th}$ signal frame, and the calculated group frequency offset estimates of these 10 symbol subgroups are $\Delta f_1, \Delta f_2, ..., \Delta f_{10}$, respectively, and the frequency offset estimate of the $K^{th}$ signal frame is:

$$\Delta f = \frac{\sum_{i=1}^{10} \Delta f_i}{10}$$

.

At step S408, the frequency offset of the $K^{th}$ signal frame is estimated by using the coarse frequency offset estimation scheme (the coarse frequency offset estimation and compensation scheme), and the method proceeds to step S410.

According to the embodiment provided in the present disclosure, if it is determined by judgment that the received signal is not transmitted from a default transmitting end, its current frequency offset estimate may be relatively large (the frequency offset estimate is greater than or equal to the default frequency offset threshold), so the FFT or V-V algorithm may be adopted for frequency offset estimation to achieve rapid convergence and stability of the frequency offset of the received signal. The process of estimating the frequency offset of the $K^{th}$ symbol group by using the coarse frequency offset estimation and compensation scheme has been described above, and will not be repeated here.

At step S410, the frequency offset of the $(K+1)^{th}$ signal frame is compensated based on the frequency offset estimate of the $K^{th}$ signal frame, and the method proceeds to step S412.

The implementation of frequency offset compensation is already described in more detail in the embodiment of the present disclosure, and will not be repeated here.

At step S412, it is determined whether (K+1) is less than Q, where Q is the total number of signal frames in the received signal; if so, the method proceeds to step S414; and if not, the process ends.

According to the embodiment provided in the present disclosure, after the frequency offset of the $(K+1)^{th}$ signal frame is compensated, it is necessary to determine whether there are other signal frames to be subjected to frequency offset compensation based on whether the $(K+1)^{th}$ signal frame is the last signal frame in the received signal. Therefore, the communication device needs to determine whether there are still signal frames to be processed in terms of frequency offset, i.e., to determine whether the value of (K+1) is less than the total number Q of signal frames in the received signal; if so, the method proceeds to step S414; and if not, the process ends.

At step S414, the value of k is increased by 1, and the method proceeds to step S416.

According to the embodiment provided in the present disclosure, after the frequency offset of the $(K+1)^{th}$ signal frame is compensated, it is necessary to estimate and compensate the frequency offset of a signal frame following the

$(K+1)^{th}$ signal frame, so the value of K may be increased by 1 at a time.

At step S416, it is determined whether the frequency offset estimate of the $(K-1)^{th}$ signal frame is less than the default frequency offset threshold; if so, the method proceeds to step S406; and if not, the step S408 is performed.

The process is performed repeatedly until all signal frames in the received signal are processed.

The frequency offset estimation and compensation method provided in the embodiment of the present disclosure has the advantages of low processing complexity, rapid convergence speed of frequency offset estimate and high frequency offset compensation accuracy.

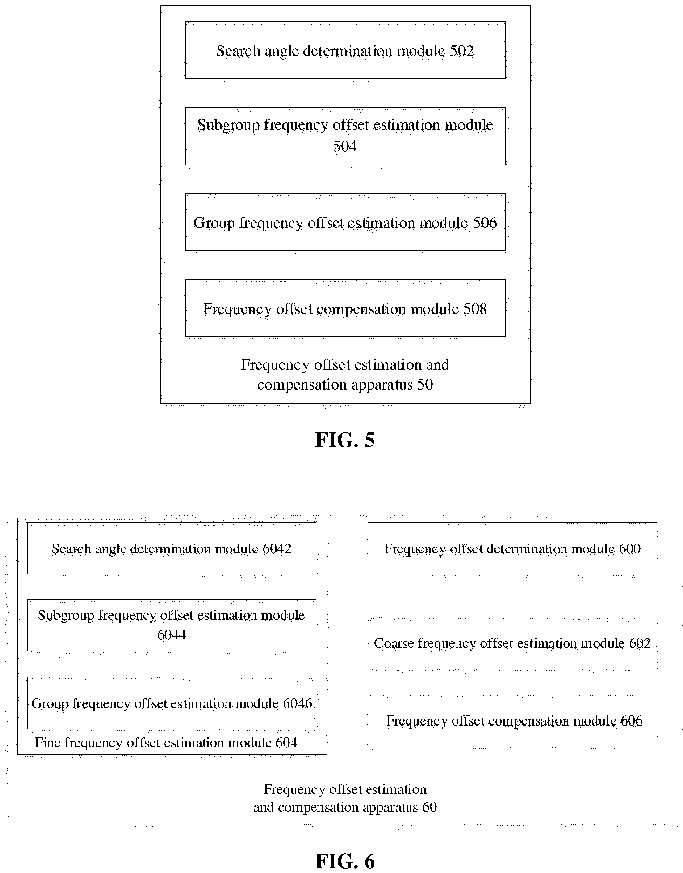

According to an embodiment provided in the present disclosure, a frequency offset estimation and compensation apparatus is further provided, and Fig. 5 shows a structure diagram of the frequency offset estimation and compensation apparatus 50.

The frequency offset estimation and compensation apparatus 50 may include a search angle determination module 502, a subgroup frequency offset estimation module 504, a group frequency offset estimation module 506 and a frequency offset compensation module 508. The search angle determination module 502 is configured to determine a plurality of search angles of a plurality of symbols in respective symbol subgroups in a $K^{th}$ symbol group in a received signal, where any one of the symbol subgroups consists of at least two symbols of which phase noise can be regarded as the same, the $K^{th}$ symbol group includes at least one symbol subgroup, and K is greater than or equal to 1. The subgroup frequency offset estimation module 504 is configured to determine a subgroup frequency offset estimate of each symbol subgroup based on the search angles of the symbols in each symbol subgroup. The group frequency offset estimation module 506 is configured to determine a frequency offset estimate of the $K^{th}$ symbol group based on the frequency offset estimates of all symbol subgroups. The frequency offset compensation module 508 is configured to compensate a frequency offset of a $(K+1)^{th}$ symbol group based on the frequency offset estimate of the $K^{th}$ symbol group.

As used herein, the symbol group refers to a symbol group containing a plurality of symbols. In some examples of the embodiment, the symbol group may refer to a "frame", and one symbol group is one signal frame. It can be understood that the received signal received by the frequency offset estimation and compensation apparatus 50 from a transmitting end includes at least one symbol group, and, in general, should include a plurality of symbol groups. Here, the $K^{th}$ symbol group subjected to frequency offset compensation in the received signal is referred to as the $K^{th}$ symbol group, and the $(K+1)^{th}$ symbol group subjected to frequency offset compensation is referred to as the $(K+1)^{th}$ symbol group, where K is greater than or equal to 1.

The symbol subgroup refers to the division of the symbol group, so one symbol group includes at least one symbol subgroup. According to the embodiment provided in the present disclosure, one symbol subgroup consists of at least two symbols of which phase noise can be regarded as the same. It can be understood that the phase noise of each symbol in the symbol subgroup cannot be exactly the same. However, the phase noise does not differ much as the symbols are close, and may be regarded as the same. In one example, the symbol group is a frame, one signal frame may include 6400 symbols, and a symbol subgroup may include 64 consecutive symbols, so that one signal frame may include 100 symbol subgroups, where the phase noise of all 64 symbols in one symbol subgroup may be approximately expressed as $\theta_\varphi$.

According to the embodiment provided in the present disclosure, when the frequency offset estimation and compensation apparatus 50 processes the received signal, the search angle determination module 502 may determine the search angles of the symbols in each symbol subgroup based on the BPS algorithm.

In some examples of the embodiment of the present disclosure, the search angle determination module 502 may determine the search angle of each symbol through calculation when determining the search angles of the symbols in the symbol subgroup. For example, it is assumed that there are 100 symbol subgroups in one signal frame and each symbol subgroup includes 64 symbols, the search angle determination module 502 may determine the search angles of the 64 symbols for each symbol subgroup, and calculate the search angles of 6400 symbols for the entire signal frame, where the search angles of the 6400 symbols may be expressed as $\varphi_1$, $\varphi_2$, $\varphi_3$, $\varphi_4\cdots$, $\varphi_{6400}$ in turn.

In other examples of the embodiment of the present disclosure, the search angle determination module 502 may not need to calculate the search angles of all symbols when determining the search angles of the symbols in each symbol subgroup in the $K^{th}$ symbol group, because it may not be necessary to use the search angles of all symbols in the subsequent calculation process. In one example, for a symbol group, the search angle determination module 502 may calculate only the search angles of the first and last symbols for one symbol subgroup. It is assumed that the $K^{th}$ symbol group includes a $q^{th}$ symbol subgroup in which there are m symbols, the search angle determination module 502 may calculate only the search angle $\varphi_1$ of the first symbol in the symbol subgroup and the search angle $\varphi_m$ of the last symbol in the symbol subgroup. There is no doubt that the symbols for which the search angle determination module 502 calculates the search angle are not limited to the first and last symbols in the symbol subgroup, but may also be at least two arbitrary symbols in the symbol subgroup.

According to the embodiment provided in the present disclosure, BPS is not the only way for the search angle determination module 502 to determine the search angle of each symbol. In some other examples, the search angle determination module 502 may also determine the search angle of each symbol based on other algorithms.

According to the embodiment provided in the present disclosure, after the search angle determination module 502 determines the search angles of the symbols in a certain symbol subgroup, the subgroup frequency offset estimation module 504 may determine the subgroup frequency offset estimate of the symbol subgroup. The following is an example of the subgroup frequency offset estimation module 504 determining the subgroup frequency offset estimate of the $q^{th}$ symbol subgroup in the $K^{th}$ symbol group: the $q^{th}$ symbol subgroup includes m symbols, where the frequency offset phase $\theta_f$, phase noise $\theta_\varphi$ and search angle $\varphi_n$ of the $n^{th}$ symbol satisfy the relation as follows: $n * \theta_f + \theta_\varphi = \varphi_n$, where n should be greater than or equal to 1 and less than or equal to m.

According to the embodiment provided in the present disclosure, since the phase noise $\theta_\varphi$ of each symbol in one symbol subgroup can be regarded as the same, in the embodiment of the present disclosure, the relations between the frequency offset phase, phase noise and search angle of each symbol in the $q^{th}$ symbol subgroup may be expressed as follows:

$$\theta_f + \theta_\varphi = \varphi_1 \qquad (1)$$

$$2\theta_f + \theta_\varphi = \varphi_2 \qquad (2)$$

$$m * \theta_f + \theta_\varphi = \varphi_m \qquad (m)$$

According to the above formulas (1) to (m), it can be deduced that $\theta_f = \frac{\varphi_m - \varphi_1}{m-1}$. Therefore, the subgroup frequency offset estimation module 504 may determine that the subgroup frequency offset estimate $\Delta f_q$ of the $q^{th}$ symbol subgroup is $\Delta f_q = \frac{\varphi_m - \varphi_1}{m-1} \cdot \frac{R_s}{2\pi}$, where $\varphi_m$ is the search angle of a $m^{th}$ symbol in the $q^{th}$ symbol subgroup, $\varphi_1$ is the search angle of a first symbol in the $q^{th}$ symbol subgroup, and $R_s$ is a baud rate of the received signal.

According to the embodiment provided in the present disclosure, after the subgroup frequency offset estimation module 504 determines the subgroup frequency offset estimate of each symbol subgroup in the $K^{th}$ symbol group, the group frequency offset estimation module 506 can determine the frequency offset estimate of the $K^{th}$ symbol group based on the frequency offset estimates of all symbol subgroups. In the embodiment, the group frequency offset estimation module 506 calculates a mean value of the subgroup frequency offset estimates of all symbol subgroups in the $K^{th}$ symbol group to obtain the mean value of the subgroup frequency offset estimates, and then takes the mean value of the subgroup frequency offset estimates as the frequency offset estimate of the $K^{th}$ symbol group. In another example of the embodiment, the group frequency offset estimation module 506 may first screen the subgroup frequency offset estimates of all symbol subgroups, calculate the mean value of the remaining subgroup frequency offset estimates after eliminating some outliers, and take the obtained mean value as the frequency offset estimate of the $K^{th}$ symbol group. In other examples of the embodiment, in addition to determining the frequency offset estimate of the $K^{th}$ symbol group by calculating the mean value, the group frequency offset estimation module 506 may also directly select a median subgroup group frequency offset estimate as the frequency offset estimate of the $K^{th}$ symbol group without calculation after determining the subgroup frequency offset estimates of all symbol subgroups.

According to the embodiment provided in the present disclosure, if one symbol group only includes one symbol subgroup, the group frequency offset estimation module 506 may calculate the subgroup frequency offset estimate of the symbol subgroup, and then directly take such subgroup frequency offset estimate as the frequency offset estimate of the symbol group.

According to the embodiment provided in the present disclosure, after the group frequency offset estimation module 506 calculates the frequency offset estimate of the $K^{th}$ symbol group in a received signal, the frequency offset compensation module 508 compensates the frequency offset of the $(K+1)^{th}$ symbol group in the received signal. According to the embodiment of the present disclosure, a frequency offset compensation scheme is provided, and the frequency offset compensation module 508 may compensate the frequency offset of the $(K+1)^{th}$ symbol group based on the following formula: $S'((K + 1)) = S((K + 1)) \cdot \exp(-\frac{i2\pi\Delta f}{R_s})$, where $S((K + 1))$ represents the frequency offset of the $(K+1)^{th}$ symbol group before frequency offset compensation, $S'((K + 1))$ represents the frequency offset of the $(K+1)^{th}$ symbol group after frequency offset compensation, $\Delta f$ represents the frequency offset estimate of the $K^{th}$ symbol group, and $R_s$ represents the baud rate of the received signal.

According to the embodiment provided in the present disclosure, compensation by the frequency offset compensation module 508 on the frequency offset of the $(K+1)^{th}$ symbol group based on the frequency offset estimate of the $K^{th}$ symbol group is actually compensation by the communication device on the frequency offset of the next symbol group based on the frequency offset estimate of the previous symbol group. When K is equal to 1, the frequency offset compensation module 508 compensates the frequency offset of the second symbol group based on the frequency offset estimate of the first symbol group; when K is equal to 2, the frequency offset compensation module 508 compensates the frequency offset of the third symbol group based on the frequency offset estimate of the second symbol group, and so on, until the frequency offset compensation on the last symbol group in the received signal is finished based on the frequency offset estimate of the penultimate symbol group in the received signal.

It can be understood that when K is greater than 1, the $K^{th}$ symbol group has already undergone frequency offset compensation before the calculation of the frequency offset estimate of the $K^{th}$ symbol group, i.e., the $K^{th}$ symbol group has undergone frequency offset compensation based on the frequency offset estimate of the $(K-1)^{th}$ symbol group. Therefore, determination of the frequency offset estimate of the $K^{th}$ symbol group is actually the calculation of the residual frequency offset of the $K^{th}$ symbol group after frequency offset compensation. In fact, the frequency offset compensation on the $(K+1)^{th}$ symbol group is the frequency offset compensation performed based on the residual frequency offset of the $(K+1)^{th}$ symbol group.

According to the embodiment provided in the present disclosure, the frequency offset estimation and compensation apparatus 50 may be deployed on a communication device, where the functions of the search angle determination module 502, the subgroup frequency offset estimation module 504, the group frequency offset estimation module 506 and the frequency offset compensation module 508 may all be implemented by a processor of the communication device.

According to the frequency offset estimation and compensation apparatus provided in the embodiment of the present disclosure, since the approximate phase noise of all symbols in one symbol subgroup can be regarded as the same, the subgroup frequency offset estimates of the symbol subgroups are determined based on the search angles of the symbols determined by the BPS algorithm, the frequency offset estimate of the symbol group is determined based on the subgroup frequency offset estimates of the symbol subgroups for compensating the frequency offset of the next symbol group based on the frequency offset estimate, so that all the symbol groups in the received signal can be subjected to frequency offset compensation by repeatedly performing the above process on all the symbol groups in turn. The frequency offset estimation and compensation scheme is low in processing complexity, but its accuracy can be greatly improved compared with the existing V-V algorithm.

According to the embodiment of the present disclosure, the frequency offset estimation and compensation scheme can estimate relatively fine frequency offsets, thus enabling a high accuracy of frequency offset estimation and compensation. For ease of description, the frequency offset estimation and compensation scheme provided in the embodiment of the present disclosure is herein referred to a "fine frequency offset estimation and compensation scheme". However, although the fine frequency offset estimation and compensation scheme has the advantage of higher estimation accuracy, the range of frequency offset estimation by this algorithm is relatively small. Therefore, if the frequency offset of the received signal is high, it is less suitable to adopt this scheme for frequency offset compensation. In one example of the embodiment of the present disclosure, before the fine frequency offset estimation and compensation scheme is adopted to estimate the frequency offset of the symbol group, it may first be determined that the current residual frequency offset is less than a default frequency offset threshold. That is, before determining the frequency offset estimate of the $K^{th}$ symbol group based on the fine frequency offset estimation and compensation scheme, it may first be determined that the frequency offset estimate of the $K^{th}$ symbol group (i.e., the residual frequency offset of the $K^{th}$ symbol group after frequency offset compensation) is less than the default frequency offset threshold.

According to the embodiment provided in the present disclosure, if it is determined through judgment that the frequency offset estimate of the $(K-1)^{th}$ symbol group is greater than or equal to the default frequency offset threshold, it is indicated that the current frequency offset of the received signal is not within the range where the fine frequency offset estimation and compensation scheme can be adopted. In this case, the frequency offset estimation and compensation apparatus, after compensating the frequency offset of the $K^{th}$ symbol group by using the frequency offset estimate of the $(K-1)^{th}$ symbol group, may determine the frequency offset estimate of the $K^{th}$ symbol group based on at least one of V-V algorithm and FFT algorithm. Since the V-V algorithm and FFT algorithm can estimate a large range of frequency offset but have lower accuracy, so the scheme for frequency offset estimation by such algorithms is herein referred to as a "coarse frequency offset estimation and compensation scheme" to be distinguished from the fine frequency offset estimation and compensation scheme mentioned above. After determining the frequency offset estimate of the $K^{th}$ symbol group based on the coarse frequency offset estimation and compensation scheme, the frequency offset of the $(K+1)^{th}$ symbol group is compensated based on the frequency offset estimate of the $K^{th}$ symbol group.

Fig. 6 shows another structure diagram of the frequency offset estimation and compensation apparatus provided in the embodiment of the present disclosure. The frequency offset estimation and compensation apparatus 60 may include a frequency offset determination module 600, a coarse frequency offset estimation module 602, a fine frequency offset estimation module 604 and a frequency offset compensation module 606.

According to the embodiment provided in the present disclosure, the frequency offset determination module 600 may be configured to determine whether the frequency offset estimate of the (K-1)$^{th}$ symbol group is less than the default frequency offset threshold or not, if not, the coarse frequency offset estimation module 602 may be configured to estimate the frequency offset of the K$^{th}$ symbol group by an algorithm such as V-V algorithm or FFT algorithm; or if so, the fine frequency offset estimation module 604 may be configured to determine the frequency offset estimate of the K$^{th}$ symbol group by the fine frequency offset estimation and compensation scheme provided in the embodiment of the present disclosure. The fine frequency offset estimation module 604 may include a search angle determination module 6042, a subgroup frequency offset estimation module 6044 and a group frequency offset estimation module 6046. The functions of the search angle determination module 6042, the subgroup frequency offset estimation module 6044 and the group frequency offset estimation module 6046 are the same as those of the search angle determination module 502, the subgroup frequency offset estimation module 504 and the group frequency offset estimation module 506 in Fig. 5 according to the embodiment of the present disclosure. The frequency offset compensation module 606 may compensate the frequency offset of the (K+1)$^{th}$ symbol group based on the frequency offset estimate of the K$^{th}$ symbol group.

According to the embodiment provided in the present disclosure, the process for the frequency offset estimation and compensation apparatus 60 to implement the frequency offset estimation and compensation method can be found in the frequency offset estimation and compensation method provided in the embodiments of the present disclosure, and will not be described in detail here.

According to the embodiment provided in the present disclosure, the frequency offset estimation and compensation apparatus 60 may be deployed on a communication device, where the functions of the frequency offset determination module 600, the coarse frequency offset estimation module 602, the fine frequency offset estimation module 604 and the frequency offset compensation module 606 may all be implemented by a processor of the communication device.

According to the frequency offset estimation and compensation apparatus provided in the embodiment of the present disclosure, when the frequency offset of the received signal is large, the coarse frequency offset estimation and compensation scheme based on an algorithm such as FFT algorithm and V-V algorithm is adopted to estimate the frequency offset of a previous symbol group after frequency offset compensation, and then the frequency offset of a next symbol group is compensated based on the determined frequency offset estimate, so that the FFT algorithm, V-V algorithm and other algorithms can be adopted to implement rapid convergence of the frequency offset of the received signal, thus converging the frequency offset of the received signal to a smaller range. Then, the frequency offset estimation and compensation apparatus estimates the frequency offset of the previous symbol group which has been compensated by using the fine frequency offset estimation and compensation scheme based on the BPS algorithm, and then compensates the next symbol group based on the determined frequency offset estimate, thus ensuring the accuracy of frequency offset estimation of the symbol group and improving the accuracy of frequency offset compensation. Generally, the accuracy of frequency offset estimation and compensation based only on the V-V algorithm is only about 10 MHz, but it can reach 1 MHz by using the frequency offset estimation and compensation apparatus provided in the embodiment of the present disclosure. Fig. 3 is a schematic diagram of performance comparison between the traditional frequency offset estimation and compensation scheme based on the V-V algorithm and the frequency offset estimation and compensation scheme in the embodiment of the present disclosure. Fig. 3 shows the error of the frequency offset estimation based on the V-V algorithm on the left side of Fig. 3, and the error of frequency offset estimation using the frequency offset estimation and compensation method provided in the embodiment of the present disclosure on the right side. It is clear from Fig. 3 that the frequency offset estimation and compensation apparatus provided in the embodiment of the present disclosure has higher accuracy of frequency offset estimation.

The frequency offset estimation and compensation apparatus provided in the embodiment of the present disclosure combines the advantages of rapid frequency offset convergence of the coarse frequency offset estimation and compensation scheme and high frequency offset estimation accuracy of the fine frequency offset estimation and compensation scheme.

According to an embodiment of the present disclosure, a computer-readable storage medium is provided, which may store one or more computer programs readable, compilable and executable by one or more processors. According to the embodiment provided in the present disclosure, the computer-readable storage medium may store a frequency offset estimation and compensation program which, when executed by one or more processors, causes the one or more processors to implement any one of the frequency offset estimation and compensation methods provided in the embodiments of the present disclosure.

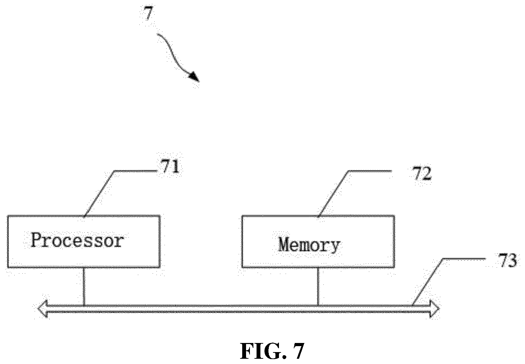

According to an embodiment of the present disclosure, a communication device 7 is provided, and Fig. 7 is a schematic diagram of a hardware structure of the communication device 7. The communication device 7 includes a processor 71, a memory 72, and a communication bus 73 configured to implement communication connection between the processor 71 and the memory 72, where the memory 72 may be the aforementioned computer-readable storage medium storing the frequency offset estimation and compensation program. The processor 71 may read, compile and execute the frequency offset estimation and compensation program stored in the memory 72 to implement any one of the frequency offset estimation and compensation methods provided in the embodiments of the present disclosure.

The processor 71 may determine a plurality of search angles of a plurality of symbols in respective symbol subgroups in a $K^{th}$ symbol group in a received signal, determine a subgroup frequency offset estimate of each symbol subgroup based on the search angles of the symbols in each symbol subgroup, then determine a frequency offset estimate of the $K^{th}$ symbol group based on the subgroup frequency offset estimates of all symbol subgroups, and finally compensate a frequency offset of a $(K+1)^{th}$ symbol group in the received signal based on the frequency offset estimate of the $K^{th}$ symbol group.

The details of implementing the frequency offset estimation and compensation method, when the processor 71 executes the frequency offset estimation and compensation program, can be found in the frequency offset estimation and compensation method provided in the embodiments of the present disclosure, and will not be repeated here.

Since the phase noise can be regarded as the same among the symbols in one symbol subgroup in the symbol group, the phase noise of the symbols can be directly offset when determining the subgroup frequency offset estimate of the symbol subgroup, so that a signal receiving end can calculate the subgroup frequency offset estimate based on the search angles of the symbols to obtain the frequency offset estimate of the symbol group. Compared with the existing schemes, the frequency offset estimation and compensation scheme adopted by the communication device provided in the embodiments of the present disclosure has higher accuracy and lower complexity, which is conducive to improving the system performance while reducing the complexity of the frequency offset compensation at the receiving end, and can ensure the communication quality between a local end and a transmitting end.

It will be apparent to those having ordinary skill in the art that all or some of the steps in the method, functional modules/units in the system or apparatus disclosed above may be implemented as software (which may be implemented with program code executable by a computing device), firmware, hardware, and a suitable combination thereof. In a hardware implementation, partitioning between functional modules/units mentioned in the above description does not necessarily correspond to partitioning of physical components. For example, a physical component may have multiple functions, or a function or step may be performed by several physical components in cooperation. Some or all of the physical components may be implemented as software executable by a processor, such as a central processor, digital signal processor or microprocessor, or as hardware, or as an integrated circuit, such as an application-specific integrated circuit. Such software may be distributed over a computer-readable medium, executed by a computing device, and in some cases the steps shown or described may be performed in a sequence different from that herein, the computer-readable medium may include a computer storage medium (or non-transitory medium) and a communication medium (or transitory medium). As is well known to those having ordinary skill in the art, the term computer storage medium includes volatile and non-volatile, removable and non-removable medium implemented in any method or technique for storing information, such as computer-readable instructions, data structures, program modules or other data. Computer storage medium includes, but is not limited to, RAM, ROM, EEPROM, flash memory or other memory technology, CD-ROM, digital versatile disk (DVD) or other optical disk storage, magnetic cassette, magnetic tape, magnetic disk storage or other magnetic storage device, or any other medium that may be used to store desired information and that may be accessed by a computer. Furthermore, as is well known to those having ordinary skill in the art, a communication medium typically contains computer-readable instructions, data structures, program modules, or other data in a modulated data signal such as a carrier wave or other transmission mechanism, and may include any information delivery medium. Therefore, the present disclosure is not limited to any particular combination of hardware and software.

The foregoing content is further detailed description of embodiments of the present disclosure with reference to specific implementations, and it is not recognized that the specific implementations of the present disclosure is limited to these description. For those having ordinary skill in the art to which the present disclosure pertains, a number of simple deductions or substitutions may be made without departing from the scope of the present disclosure, as defined by the appended claims.

**Claims**

1. A frequency offset estimation and compensation method, comprising following steps of:

   determining (S102) a plurality of search angles of a plurality of symbols in respective symbol subgroups in a $K^{th}$ symbol group in a received signal based on a phase search algorithm, wherein any one of the symbol subgroups consists of at least two symbols of which phase noise can be regarded as the same, the $K^{th}$ symbol group comprises more than one symbol subgroup, and K is greater than or equal to 1;
   determining (S104) a subgroup frequency offset estimate of each symbol subgroup based on the search angles of the symbols in each symbol subgroup;
   determining (S106) a frequency offset estimate of the $K^{th}$ symbol group based on the subgroup frequency offset estimates of all symbol subgroups; and
   compensating (S108) a frequency offset of a $(K+1)^{th}$ symbol group in the received signal based on the frequency offset estimate of the $K^{th}$ symbol group;
**characterized in that**,
determining (S106) a frequency offset estimate of the $K^{th}$ symbol group based on the subgroup frequency offset estimates of all symbol subgroups comprises a step of:
determining a mean value of the frequency offset estimates of all symbol subgroups as the frequency offset estimate of the $K^{th}$ symbol group.

2. The frequency offset estimation and compensation method of claim 1, wherein determining (S 102) a plurality of search angles of a plurality of symbols in respective symbol subgroups in a $K^{th}$ symbol group in a received signal comprises a step of determining the search angles of the symbols in each symbol subgroup in the $K^{th}$ symbol group in the received signal based on a Blind Phase Search, BPS algorithm.

3. The frequency offset estimation and compensation method of claim 1, wherein determining (S104) a subgroup frequency offset estimate of each symbol subgroup based on the search angles of the symbols in each symbol subgroup comprises a step of:

determining a frequency offset estimate of a $q^{th}$ symbol subgroup in the $K^{th}$ symbol group by following formula:

$$\Delta f_q = \frac{\varphi_m - \varphi_1}{m-1} \cdot \frac{R_s}{2\pi},$$

where $\Delta f_q$ is the frequency offset estimate of the $q^{th}$ symbol subgroup, $\varphi_m$ is the search angle of a $m^{th}$ symbol in the $q^{th}$ symbol subgroup, $\varphi_1$ is the search angle of a first symbol in the $q^{th}$ symbol subgroup, and $R_s$ is a baud rate of the received signal.

4. The frequency offset estimation and compensation method of claim 1, wherein compensating (S108) a frequency offset of a $(K+1)^{th}$ symbol group in the received signal based on the frequency offset estimate of the $K^{th}$ symbol group comprises a step of:
compensating the frequency offset of the $(K+1)^{th}$ symbol group by:

$$S'((K+1)) = S((K+1)) \cdot \exp(-\frac{i2\pi\Delta f}{R_s});$$

where $S((K + 1))$ represents the frequency offset of the $(K+1)^{th}$ symbol group before frequency offset compensation, $S'((K + 1))$ represents the frequency offset of the $(K+1)^{th}$ symbol group after frequency offset compensation, $\Delta f$ represents the frequency offset estimate of the $K^{th}$ symbol group, and $R_s$ represents the baud rate of the received signal.

5. The frequency offset estimation and compensation method of any one of claims 1 to 4, further comprising following steps of:
before determining (S102) a plurality of search angles of a plurality of symbols in respective symbol subgroups in a $K^{th}$ symbol group in a received signal,

determining (S202) that a frequency offset estimate of a $(K-1)^{th}$ symbol group in the received signal is less than a default frequency offset threshold, wherein K is greater than 1; or
determining (S404) that the received signal is transmitted from a default transmitting end.

6. The frequency offset estimation and compensation method of any one of claims 1 to 5, wherein, before determining (S 102) a plurality of search angles of a plurality of symbols in respective symbol subgroups in a $K^{th}$ symbol group in a received signal, the method further comprises:

determining (S202) whether or not the frequency offset estimate of the $(K-1)^{th}$ symbol group in the received signal is greater than or equal to the default frequency offset threshold,
in response to determining that the frequency offset estimate of the $(K-1)^{th}$ symbol group in the received signal is greater than or equal to the default frequency offset threshold, determining (S206) the frequency offset estimate of the $K^{th}$ symbol group based on at least one of Viterb-Viterb algorithm and Fast Fourier transform, FFT algorithm.

7. A communication device (7), comprising a processor (71), a memory (72) and a communication bus (73), wherein

the communication bus (73) is configured for communication between the processor (71) and the memory (72); and
the processor (71) is configured to execute one or more programs stored in the memory (72) to implement the frequency offset estimation and compensation method of any one of claims 1 to 6.

8. A computer-readable storage medium storing one or more programs which, when executed by one or more processors, cause the one or more processors to implement the frequency offset estimation and compensation method of any one of claims 1 to 6.

**Patentansprüche**

1. Frequenzversatz-Schätzungs- und -Kompensationsverfahren, die folgenden Schritte umfassend:

Bestimmen (S102) einer Vielzahl von Suchwinkeln einer Vielzahl von Symbolen in jeweiligen Symboluntergruppen in einer K-ten Symbolgruppe in einem empfangenen Signal basierend auf einem Phasensuchalgorithmus, wobei eine beliebige eine der Symboluntergruppen aus mindestens zwei Symbolen, deren Phasenrauschen als gleich angesehen werden kann, besteht, die K-te Symbolgruppe mehr als eine Symboluntergruppe umfasst und K größer als oder gleich 1 ist;
Bestimmen (S104) einer Untergruppen-Frequenzversatzschätzung jeder Symboluntergruppe basierend auf den Suchwinkeln der Symbole in jeder Symboluntergruppe;
Bestimmen (S106) einer Frequenzversatzschätzung der K-ten Symbolgruppe basierend auf den Untergruppen-Frequenzversatzschätzungen aller Symboluntergruppen; und
Kompensieren (S108) eines Frequenzversatzes einer (K+1)-ten Symbolgruppe in dem empfangenen Signal basierend auf der Frequenzversatzschätzung der K-ten Symbolgruppe;
**dadurch gekennzeichnet, dass**
Bestimmen (S106) einer Frequenzversatzschätzung der K-ten Symbolgruppe basierend auf den Untergruppen-Frequenzversatzschätzungen aller Symboluntergruppen einen folgenden Schritt umfasst:
Bestimmen eines Mittelwerts der Frequenzversatzschätzungen aller Symboluntergruppen als die Frequenzversatzschätzung der K-ten Symbolgruppe.

2. Frequenzversatz-Schätzungs- und -Kompensationsverfahren nach Anspruch 1, wobei Bestimmen (S102) einer Vielzahl von Suchwinkeln einer Vielzahl von Symbolen in jeweiligen Symboluntergruppen in einer K-ten Symbolgruppe in einem empfangenen Signal einen Schritt des Bestimmens der Suchwinkel der Symbole in jeder Symboluntergruppe in der K-ten Symbolgruppe in dem empfangenen Signal basierend auf einem Blindphasensuche- bzw. BPS-Algorithmus umfasst.

3. Frequenzversatz-Schätzungs- und -Kompensationsverfahren nach Anspruch 1, wobei Bestimmen (S104) einer Untergruppen-Frequenzversatzschätzung jeder Symboluntergruppe basierend auf den Suchwinkeln der Symbole in jeder Symboluntergruppe einen folgenden Schritt umfasst:

Bestimmen einer Frequenzversatzschätzung einer q-ten Symboluntergruppe in der K-ten Symbolgruppe durch die folgende Formel:

$$\Delta f_q = \frac{\varphi_m - \varphi_1}{m-1} \cdot \frac{R_s}{2\pi\prime}$$

wobei $\Delta f_q$ die Frequenzversatzschätzung der q-ten Symboluntergruppe ist, $\varphi_m$ der Suchwinkel eines m-ten Symbols in der q-ten Symboluntergruppe ist, $\varphi_1$ der Suchwinkel eines ersten Symbols in der q-ten Symboluntergruppe ist und $R_s$ eine Baudrate des empfangenen Signals ist.

4. Frequenzversatz-Schätzungs-

und -Kompensationsverfahren nach Anspruch 1, wobei Kompensieren (S108) eines Frequenzversatzes einer (K+1)-ten Symbolgruppe in dem empfangenen Signal basierend auf der Frequenzversatzschätzung der K-ten Symbolgruppe einen folgenden Schritt umfasst:

Kompensieren des Frequenzversatzes der (K+1)-ten Symbolgruppe durch:

$$S'\big((K+1)\big) = S((K+1)) \cdot \exp\left(-\frac{i2\pi\Delta f}{R_s}\right);$$

wobei **S((K+1))** den Frequenzversatz der (K+1)-ten Symbolgruppe vor der Frequenzversatzkompensation repräsentiert, **S'((K+1))** den Frequenzversatz der (K+1)-ten Symbolgruppe nach der Frequenzversatzkompensation repräsentiert, $\Delta$**f** die Frequenzversatzschätzung der K-ten Symbolgruppe repräsentiert und $R_s$ die Baudrate des empfangenen Signals repräsentiert.

5. Frequenzversatz-Schätzungs-
und -Kompensationsverfahren nach einem der Ansprüche 1 bis 4, ferner die folgenden Schritte umfassend:
vor dem Bestimmen (S102) einer Vielzahl von Suchwinkeln einer Vielzahl von Symbolen in jeweiligen Symboluntergruppen in einer K-ten Symbolgruppe in einem empfangenen Signal

Bestimmen (S202), dass eine Frequenzversatzschätzung einer (K-1)-ten Symbolgruppe in dem empfangenen Signal kleiner als ein Standard-Frequenzversatzschwellenwert ist, wobei K größer als 1 ist; oder
Bestimmen (S404), dass das empfangene Signal von einem Standard-Übertragungsende übertragen wird.

6. Frequenzversatz-Schätzungs-
und -Kompensationsverfahren nach einem der Ansprüche 1 bis 5, wobei das Verfahren vor dem Bestimmen (S102) einer Vielzahl von Suchwinkeln einer Vielzahl von Symbolen in jeweiligen Symboluntergruppen in einer K-ten Symbolgruppe in einem empfangenen Signal ferner umfasst:

Bestimmen (S202), ob die Frequenzversatzschätzung der (K-1)-ten Symbolgruppe in dem empfangenen Signal größer als der oder gleich dem Standard-Frequenzversatzschwellenwert ist oder nicht,
als Reaktion auf Bestimmen, dass die Frequenzversatzschätzung der (K-1)-ten Symbolgruppe in dem empfangenen Signal größer als der oder gleich dem Standard-Frequenzversatzschwellenwert ist, Bestimmen (S206) der Frequenzversatzschätzung der K-ten Symbolgruppe basierend auf mindestens einem eines Viterb-Viterb-Algorithmus und eines Algorithmus einer schnellen Fourier-Transformation, FFT.

7. Kommunikationsvorrichtung (7), umfassend einen Prozessor (71), einen Speicher (72) und einen Kommunikationsbus (73), wobei

der Kommunikationsbus (73) konfiguriert ist für Kommunikation zwischen dem Prozessor (71) und dem Speicher (72); und
der Prozessor (71) konfiguriert ist zum Ausführen eines oder mehrerer in dem Speicher (72) gespeicherter Programme, um das Frequenzversatz-Schätzungs- und -Kompensationsverfahren nach einem der Ansprüche 1 bis 6 zu implementieren.

8. Computerlesbares Speichermedium, das ein oder mehrere Programme speichert, die, wenn sie durch einen oder mehrere Prozessoren ausgeführt werden, den einen oder die mehreren Prozessoren veranlassen, das Frequenzversatz-Schätzungs- und -Kompensationsverfahren nach einem der Ansprüche 1 bis 6 zu implementieren.

**Revendications**

1. Procédé d'estimation et de compensation de décalage de fréquence, comprenant les étapes suivantes de :

détermination (S102) d'une pluralité d'angles de recherche d'une pluralité de symboles dans un sous-groupe de symboles respectif dans un K$^{\text{ième}}$ groupe de symboles dans un signal reçu sur la base d'un algorithme de recherche de phase, l'un quelconque des sous-groupes de symboles d'au moins deux symboles desquels un bruit de phase peut être considéré comme identique, le K$^{\text{ième}}$ groupe de symboles comprenant plus d'un sous-groupe de symboles, et K étant supérieur ou égal 1 ;
détermination (S104) d'une estimation de décalage de fréquence de sous-groupe de chaque sous-groupe de symboles sur la base des angles de recherche des symboles dans chaque sous-groupe de symboles ;
détermination (S106) d'une estimation de décalage de fréquence du K$^{ième}$ groupe de symboles sur la base des estimations de décalage de fréquence de sous-groupes de tous les sous-groupes de symboles ; et
compensation (S108) d'un décalage de fréquence d'un (K+1)$^{ième}$ groupe de symboles dans le signal reçu sur la base de l'estimation de décalage de fréquence du K$^{ième}$ groupe de symboles ;
**caractérisé en ce que**
la détermination (S106) d'une estimation de décalage de fréquence du K$^{ième}$ groupe de symboles sur la base des estimations de décalage de fréquence de sous-groupes de tous les sous-groupes de symboles comprend une étape de :
détermination d'une valeur moyenne des estimations de décalage de fréquence de tous les sous-groupes de symboles en tant qu'estimation de décalage de fréquence du K$^{ième}$ groupe de symboles.

2. Procédé d'estimation et de compensation de décalage de fréquence selon la revendication 1, la détermination (S102) d'une pluralité d'angles de recherche d'une pluralité de symboles dans des sous-groupes de symboles respectifs dans un K$^{ième}$ groupe de symboles dans un signal reçu comprenant une étape de détermination des angles de recherche des symboles dans chaque sous-groupe de symboles dans le K$^{ième}$ groupe de symboles dans le signal reçu sur la base d'un algorithme de recherche de phase aveugle, BPS.

3. Procédé d'estimation et de compensation de décalage de fréquence selon la revendication 1, la détermination (S104) d'une estimation de décalage de fréquence de sous-groupe de chaque sous-groupe de symboles sur la base des angles de recherche des symboles dans chaque sous-groupe de symboles comprenant une étape de :
détermination d'une estimation de décalage de fréquence d'un q$^{ième}$ sous-groupe de symboles dans le K$^{ième}$ groupe de symboles par la formule suivante :

$$\Delta f_q = \frac{\varphi_m - \varphi_1}{m-1} \cdot \frac{R_s}{2\pi} \; ;$$

où $\Delta f_q$ est l'estimation de décalage de fréquence du q$^{ième}$ sous-groupe de symboles, $\varphi_m$ est l'angle de recherche d'un m$^{ième}$ symbole dans le q$^{ième}$ sous-groupe de symboles, $\varphi_1$ est l'angle de recherche d'un premier symbole dans le q$^{ième}$ sous-groupe de symboles, et $R_s$ est un débit en bauds du signal reçu.

4. Procédé d'estimation et de compensation de décalage de fréquence selon la revendication 1, la compensation (S108) d'un décalage de fréquence d'un (K+1)$^{ième}$ groupe de symboles dans le signal reçu sur la base de l'estimation de décalage de fréquence du K$^{ième}$ groupe de symboles comprenant une étape de :
compensation du décalage de fréquence du (K+1)$^{ième}$ groupe de symboles par :

$$S'\big((K+1)\big) = S((K+1)) \cdot exp\left(-\frac{i2\pi\Delta f}{R_s}\right) \; ;$$

où $S((K+1))$ représente le décalage de fréquence du (K+1)$^{ième}$ groupe de symboles avant une compensation de décalage de fréquence, $S'((K+1))$ représente le décalage de fréquence du (K+1)$^{ième}$ groupe de symboles après une compensation de décalage de fréquence, $\Delta f$ représente l'estimation de décalage de fréquence du K$^{ième}$ groupe de symboles, et $R_s$ représente le débit en bauds du signal reçu.

5. Procédé d'estimation et de compensation de décalage de fréquence selon l'une quelconque des revendications 1 à 4, comprenant en outre les étapes suivantes de :

avant la détermination (S102) d'une pluralité d'angles de recherche d'une pluralité de symboles dans des sous-groupes de symboles respectifs dans un K$^{ième}$ groupe de symboles dans un signal reçu,
détermination (S202) qu'une estimation de décalage de fréquence d'un (K-1)$^{ième}$ groupe de symboles dans le signal reçu est inférieure à un seuil de décalage de fréquence par défaut, K étant supérieur à 1 ; ou
détermination (S404) que le signal reçu est transmis depuis une extrémité d'émission par défaut.

6. Procédé d'estimation et de compensation de décalage de fréquence selon l'une quelconque des revendications 1 à 5, avant la détermination (S102) d'une pluralité d'angles de recherche d'une pluralité de symboles dans des sous-groupes de symboles respectifs dans un $K^{\text{ième}}$ groupe de symboles dans un signal reçu, le procédé comprenant en outre :

la détermination (S202) si l'estimation de décalage de fréquence du $(K-1)^{\text{ième}}$ groupe de symboles dans le signal reçu est ou non supérieure ou égale au seuil de décalage de fréquence par défaut,
en réponse à la détermination que l'estimation de décalage de fréquence du $(K-1)^{\text{ième}}$ groupe de symboles dans le signal reçu est supérieure ou égale au seuil de décalage de fréquence par défaut, la détermination (S206) de l'estimation de décalage de fréquence du $K^{\text{ième}}$ groupe de symboles sur la base d'un algorithme de Viterbi-Viterbi et/ou d'un algorithme de transformation de Fourier rapide, FFT.

7. Dispositif de communication (7), comprenant un processeur (71), une mémoire (72) et un bus de communication (73),

le bus de communication (73) étant configuré pour une communication entre le processeur (71) et la mémoire (72) ; et
le processeur (71) étant configuré pour exécuter un ou plusieurs programmes stockés dans la mémoire (72) pour mettre en oeuvre le procédé d'estimation et de compensation de décalage de fréquence selon l'une quelconque des revendications 1 à 6.

8. Support de stockage lisible par ordinateur stockant un ou plusieurs programmes qui, lorsqu'ils sont exécutés par un ou plusieurs processeurs, amènent le ou les processeurs à mettre en oeuvre le procédé d'estimation et de compensation de décalage de fréquence selon l'une quelconque des revendications 1 à 6.

Determine a plurality of search angles of a plurality of symbols in respective symbol subgroups in a $K^{th}$ symbol group in a received signal

S102

Determine a subgroup frequency offset estimate of each symbol subgroup based on the search angles of the symbols in respective symbol subgroups

S104

Determine a frequency offset estimate of the $K^{th}$ symbol group based on the frequency offset estimates of all symbol subgroups

S106

Compensate a frequency offset of a $K+1^{th}$ symbol group in the received signal based on the frequency offset estimate of the $K^{th}$ symbol group

S108

**FIG. 1**

Start

S202

Determine whether the frequency offset estimate of the ( K-1)$^{th}$ symbol group is less than the default frequency offset threshold

N

S206

S204

Y

Estimate the frequency offset of the K$^{th}$ symbol group by using the fine frequency offset estimation scheme

Estimate the frequency offset of the K$^{th}$ symbol group by using the coarse frequency offset estimation scheme

Compensate the frequency offset of the (K+1)$^{th}$ symbol group based on the frequency offset estimate of the K$^{th}$ symbol group

S208

S210

Determine whether (K+1) is less than Q

Y

N

S212

Increase the value of K by 1

End

FIG. 2

**FIG. 3**

**FIG. 4**

Search angle determination module 502

Subgroup frequency offset estimation module 504

Group frequency offset estimation module 506

Frequency offset compensation module 508

Frequency offset estimation and
compensation apparatus 50

**FIG. 5**

Search angle determination module 6042

Subgroup frequency offset estimation module 6044

Group frequency offset estimation module 6046

Fine frequency offset estimation module 604

Frequency offset determination module 600

Coarse frequency offset estimation module 602

Frequency offset compensation module 606

Frequency offset estimation
and compensation apparatus 60

**FIG. 6**

FIG. 7

**EP 3 849 147 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160323091 A1
- WO 2017059783 A1